# EUROPÄISCHE PATENTSCHRIFT

(11) **EP 3 386 050 B1**
(45) Veröffentlichungstag und Bekanntmachung des Hinweises auf die Patenterteilung: **12.08.2020**
(21) Anmeldenummer: 18161273.0
(22) Anmeldetag: 12.03.2018
(51) Int. Cl.: H02G 3/06, H02G 3/08

(54) **LAMELLE EINER KABELVERSCHRAUBUNGSVORRICHTUNG**
LAMELLA OF A CABLE SCREWING DEVICE
LAMELLE D'UN DISPOSITIF DE PRESSE-ÉTOUPE

(30) Priorität: 07.04.2017 DE 102017107566
(43) Veröffentlichungstag der Anmeldung: 10.10.2018
(73) Patentinhaber: ebm-papst Mulfingen GmbH & Co. KG, 74673 Mulfingen (DE)
(72) Erfinder: STURM, Michael, 97980 Bad Mergentheim-Rot (DE); MASCHKE, Matthias, 74635 Kupferzell (DE); Martin, Baer, 74672 Mulfingen (DE)
(74) Vertreter: Staeger & Sperling Partnerschaftsgesellschaft mbB

(56) Entgegenhaltungen:
- EP-A1- 2 577 806
- DE-A1- 3 418 978
- US-A- 4 150 250

## Beschreibung

Die Erfindung betrifft eine eine Kabelverschraubungsvorrichtung mit einer Vielzahl von Lamellen sowie einen Klemmkasten mit mindestens einer daran angeordneter Kabelverschraubungsvorrichtung.

Aus dem Stand der Technik ist eine Vielzahl von unterschiedlichen Kabelverschraubungsvorrichtungen bekannt, wobei stets ein durch die Kabelverschraubungsvorrichtungen geführtes Kabel an einer vorbestimmten Position arretiert wird. Hierzu weisen die Kabelverschraubungsvorrichtungen zumeist Lamellen auf, die beim Verschrauben in direktem Kontakt oder mit einem Dichtelement auf das Kabel gedrückt werden, um die Arretierung herzustellen. Ein häufig verwendeter Einsatzbereich der Kabelverschraubungsvorrichtungen ist an Klemmkästen, in welche die Kabel zum Anschluss hineingeführt und von der Kabelverschraubungsvorrichtungen positionsfest gehalten werden, um den Anschluss selbst kräftefrei herstellen zu können.

Als gattungsbildender druckschriftlicher Stand der Technik wäre beispielsweise die DE8400007U1 oder die EP 2 577 806 B1 zu nennen. Weiterer Stand der Technik ist offenbart in den Dokumenten DE 34 18 978 A1, EP 2 577 806 A1 und US 4,150,250 A.

Bei herkömmlichen Kabelverschraubungsvorrichtungen kommen meist Lamellen aus Kunststoff zum Einsatz, deren Stabilität in der Praxis häufig nicht ausreicht. Teils durch unsachgemäßen Gebrauch, teils durch Fehlbedienung oder Verschleiß brechen die Lamellen und verringern die Funktionsfähigkeit der Kabelverschraubungsvorrichtung. In der Praxis spielt hierbei der materialspezifische Wert der Bruchdehnung der Lamellen eine entscheidende Rolle, da es beim Überschreiten der maximalen Bruchdehnungswerte der Lamellen zu einer Rissbildung oder gar zum Bruch kommt.

Der Erfindung liegt deshalb die Aufgabe zugrunde, eine Kabelverschraubungsvorrichtung mit Lamellen bereitzustellen, die höhere Bruchdehnungswerte erreichen und somit stärker belastbar sind und/oder eine gesteigerte Flexibilität unterstützen

Diese Aufgabe wird durch eine spezielle, neu entwickelte Lamellengeometrie gemäß der Merkmalskombination nach Anspruch 1 gelöst.

Erfindungsgemäß wird eine Kabelverschraubungsvorrichtung mit Lamellen gemäß Anspruch 1 vorgeschlagen, die sich freistehend von einem Befestigungsabschnitt an der Kabelverschraubungsvorrichtung in axialer Richtung bis zu einem freien Ende erstrecken und entlang ihrer axialen Gesamterstreckung eine Mehrzahl von aneinander angrenzenden Abschnitten aufweisen, die im Axialschnitt gesehen jeweils unterschiedliche oder über ihre axiale Erstreckung variierende Querschnittsflächen aufweisen. Die Querschnittsfläche der Lamellen verringert sich hierbei ausgehend von dem Befestigungsabschnitt entlang ihrer axialen Erstreckung bis zu einem Punkt der geringsten Querschnittsfläche zumindest abschnittsweise. Zudem ist der Punkt der geringsten Querschnittsfläche der Lamellen von ihrem freien Ende axial beabstandet.

Die Lamellen weisen in einer Ausführung eine mehreckige Querschnittsfläche auf, wobei die Anpassung der Größe der Querschnittsfläche vorzugsweise auf nur einer Seitenfläche der Lamelle erfolgt.

Die freistehenden Lamellen sind wie diejenigen des Stands der Technik ausgebildet, in eine Richtung senkrecht zur Axialrichtung gebogen zu werden, um eine Anpresskraft auf ein durch die Kabelverschraubungsvorrichtung hindurchgeführtes Kabel auszuüben.

Durch Computersimulationen und praktische Versuche konnten besonders kritische Bereiche der Lamellen mit Belastungsspitzen und vermehrt auftretenden Brüchen herausgefunden werden. Durch eine erfindungsgemäß definiert variierende Materialverteilung (Materialreduzierung und Materialzugabe) der Lamelle über ihre Axialerstreckung werden höhere Bruchdehnungswerte und/oder eine gesteigerte Flexibilität und Elastizität der Lamelle in diesen kritischen Bereichen bereitgestellt. Die Anpassung der Materialverteilung spiegelt dabei die jeweilige Querschnittsfläche im jeweiligen Abschnitt entlang der Axialerstreckung der Lamelle wieder. Durch die spezielle Lamellengeometrie wird die Flexibilität der Kabelverschraubungsvorrichtung gegenüber herkömmlichen Lamellengeometrien um mindestens 50% erhöht.

In einer bezüglich der erreichten Bruchdehnungswerte günstigen und erfindungsgemäßen Ausführung verringert sich die Querschnittsfläche der Lamellen in einem an die Kabelverschraubungsvorrichtung anschließenden Einlaufabschnitt von einer Querschnittsfläche A1 auf eine Querschnittsfläche A2. Der Einlaufabschnitt weist dabei eine Axialerstreckung auf, die in einem Bereich von 0,1 - 0,2 der Gesamterstreckung H der Lamelle liegt, so dass gilt 0,1 < H2/H < 0,2. Weiter bevorzugt wird ein Verhältnis von H2/H, bei dem gilt 0,14 < H2/H < 0,17. Der Verlauf der sich im Einlaufabschnitt verringernden Querschnittsfläche ist vorzugsweise stetig.

Als sehr effektives und erfindungsgemäßes Mittel zur Erhöhung der Bruchdehnungswerte, d.h. der Flexibilität bzw. Elastizität der Lamellen hat sich eine Ausführung erwiesen, bei der sich die Querschnittsfläche der Lamellen in einem an den Einlaufabschnitt angrenzenden und sich bis zu dem Punkt der geringsten Querschnittsfläche erstreckenden Mittelabschnitt von der Querschnittsfläche A2 auf eine geringste Querschnittsfläche A3 der Lamellen verringert, wobei gilt 0,3 ≤ A3/A2 ≤ 0,8, weiter bevorzugt 0,5 ≤ A3/A2 ≤ 0,7, noch weiter bevorzugt 0,6 ≤ A3/A2 ≤ 0,65. Als vorteilhafte Detaillösung ist das Verhältnis von A3/A2=0,63.

Weiter vorteilhaft ist ein Verhältnis der beschrieben Querschnittsflächen A2/A1 in einem Bereich, der definiert ist als 0,4 ≤ A2/A1 ≤ 0,85, weiter bevorzugt als 0,6 ≤ A2/A1 ≤ 0,7.

Bei der Verringerung der Querschnittsfläche entlang der Axialerstreckung der Lamellen weist der Mittelabschnitt in einer vorteilhaften Ausführung eine Axialerstreckung (H3-H2) auf, die in einem Bereich von 0,4 - 0,7 der Gesamterstreckung H der Lamellen liegt, so dass gilt 0,4 ≤ (H3-H2)/H ≤ 0,7, weiter bevorzugt 0,5 ≤ (H3-H2)/H ≤ 0,6. Losgelöst von der axialen Länge des Einlaufabschnitts ist ein Verhältnis der axialen Länge H3 von dem Befestigungsabschnitt an der Kabelverschraubungsvorrichtung bis zum Punkt der geringsten Querschnittsfläche gegenüber der Gesamterstreckung H der Lamellen vorzugsweise in einem Bereich von 0,6 - 0,8 [d.h. 0,6 ≤ H3/H ≤ 0,8], weiter bevorzugt zwischen 0,7 und 0,75 [d.h. 0,7 ≤ H3/H ≤ 0,75]. Der Verlauf der sich im Mittelabschnitt verringernden Querschnittsfläche ist vorzugsweise stetig.

Wie bereits ausgeführt ist erfindungsgemäß der Punkt der geringsten Querschnittsfläche der Lamellen von ihrem freien Ende axial beabstandet. In einer vorteilhaften Ausführungsvariante ist zudem vorgesehen, dass die Querschnittsfläche der Lamellen in einem sich an das freie Ende der Lamellen angrenzenden Endabschnitt ein durch Materialanhäufung in einer zur Axialerstreckung senkrechten Richtung realisiertes lokales Maximum aufweist.

In einem speziellen Ausführungsbeispiel der Lamellen ist hierzu vorgesehen, dass eine maximale Querschnittsfläche A4 der Lamellen in einem sich jeweils an den Mittelabschnitt und an das freie Ende der Lamellen angrenzenden Endabschnitt in einem Verhältnis zu der Querschnittsfläche A1 an der Kabelverschraubungsvorrichtung und der geringsten Querschnittsfläche A3 der Lamellen steht, so dass gilt 1,1xA1 ≥ A4 ≥ A3. Die sich entlang des Mittelabschnitts in axialer Richtung verringerte Querschnittsfläche wird somit im an das freie Ende angrenzenden Endabschnitt deutlich vergrößert. Die Vergrößerung der Querschnittsfläche im Endabschnitt erfolgt vorzugsweise stetig.

Ferner ist eine Ausführung günstig, bei der eine maximale Querschnittsfläche der Lamellen an einer Position H4 im Endabschnitt liegt, die im Verhältnis zur Gesamterstreckung der Lamellen in einem Bereich liegt, dass gilt 0,8 ≤ H4/H ≤ 0,95, insbesondere 0,85 ≤ H4/H ≤ 0,9.

Der Endabschnitt ist der Bereich, auf den zur Arretierung des Kabels ein Befestigungsmittel, beispielsweise ein Schraubenkopf, aufgeschoben wird. Das Befestigungsmittel wird über die Lamellen hinweg geführt und wirkt aktiv mit Kraft auf sie ein. Der Endabschnitt ist zumeist der erste Kontaktpunkt und deshalb gegenüber den angrenzenden Abschnitten der Lamelle ebenfalls spezifisch gemäß der vorstehend dargelegten Geometrie mit lokalem Maximum der Querschnittsfläche gestaltet.

Im Bereich zwischen der maximalen Querschnittsfläche und dem freien Ende nimmt die Querschnittsfläche der Lamellen vorzugsweise exponentiell oder stetig ab.

In einer ferner vorteilhaften Ausführung sind die Lamellen elastisch und aus einem faserverstärkten und/oder mit einem Flammschutz versetzten Kunststoffmaterial gebildet. Die vorstehend diskutierte erfindungsgemäße Lamellengeometrie wirkt sich besonders vorteilhaft bei faserverstärkten und/oder mit einem Flammschutz versetzten Kunststoffen aus, deren materialspezifische Bruchdehnungswerte geringer sind. Die angepasste Geometrie kann das Defizit an Bruchdehnung aufgrund des Materials ausgleichen und gleichzeitig die erhöhte Steifigkeit durch Faserverstärkung und/oder die positive erschwerte Entflammbarkeit durch Flammschutzmittel nutzen.

Die Erfindung umfasst die Kabelverschraubungsvorrichtung mit einer Vielzahl von identisch geformten vorstehend beschriebenen Lamellen, die zueinander in einem umlaufenden Lamellenkranz angeordnet sind. Die zu den Lamellen beschriebenen Merkmale sind hierbei beliebig kombinierbar soweit dies technisch umsetzbar ist und soweit sie nicht im Widerspruch zueinander stehen.

Die Lamellen weisen nach radial innen weisende Innenflächen auf, die im bestimmungsgemäßen Gebrauch einem durch die Kabelverschraubungsvorrichtung durchführbaren Kabel zuweisen. Die Innenflächen erstrecken sich eben und geradlinig in axialer Richtung, so dass die Lamellen über ihre axiale Gesamterstreckung einen im Wesentlichen konstanten Innendurchmesser der Kabelverschraubungsvorrichtung ausbilden. Die Lamellen sind in Umfangsrichtung zueinander beabstandet angeordnet, ihre Innenflächen sind eben und flächig ausgebildet. Der beschriebene Innendurchmesser ist mithin nicht notwendigerweise rund, sondern kann auch durch Seitenflächenkanten der Innenseitenflächen der Lamellen bestimmt werden.

In einer Ausführung ist vorgesehen, dass eine Anpassung der Querschnittsflächen über die axiale Gesamterstreckung H der Lamellen ausschließlich über deren Außengeometrie erfolgt Als Außengeometrie ist die dabei die Geometrie auf einer Seite der Lamellen definiert, die einem Befestigungsmittel zur Arretierung eines Kabels zuweist.

Zur leichteren Montage, Reduzierung der Teilezahl und Kosten ist in einer Ausführung der Kabelverschraubungsvorrichtung vorgesehen, dass die Lamellen einstückig daran ausgebildet, insbesondere im Spritzgussverfahren angespritzt sind.

Die Kabelverschraubungsvorrichtung ist in einer Weiterbildung so ausgebildet, dass sie ein Befestigungselement zum funktionalen Zusammenwirken mit einem Befestigungsmitteil aufweist und sich die Lamellen angrenzend an das Befestigungselement in axialer Richtung erstrecken, so dass das Befestigungsmittel auf die Kabelverschraubungsvorrichtung aufsetzbar ist und sowohl auf die Lamellen als auch auf das Befestigungselement einwirken kann. Als Befestigungselement kommt beispielsweise ein Gewinde, als Befestigungsmittel ein Schraubenkopf oder eine Überwurfmutter zum Einsatz. Der Schraubenkopf bzw. die Überwurfmutter kann außenseitig über die Lamellen hinweg an das Gewinde angesetzt und dort verschraubt werden. Das Befestigungsmittel (Schraubenkopf bzw. Überwurfmutter) weisen dabei Abschnitte auf, welche auf die Lamellen in radialer Richtung einwirken und diese elastisch nach radial innen drücken können.

Die Erfindung umfasst ferner einen Klemmkasten mit mindestens einer im Spritzgussverfahren einstückig daran angespritzten vorstehend beschriebenen Kabelverschraubungsvorrichtung, wobei die mindestens eine Kabelverschraubungsvorrichtung und der Klemmasten einen durchlaufenden Öffnungskanal zur Durchführung eines Kabels durch die Kabelverschraubungsvorrichtung und in ein Inneres des Klemmkastens aufweisen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: einen Klemmkasten mit drei daran ausgebildeten Kabelverschraubungsvorrichtungen in perspektivischer Ansicht;
- Fig. 2: eine seitliche Schnittansicht einer Kabetverschraubungsvorrichtung;
- Fig. 3: eine Detailansicht einer Lamelle der Kabelverschraubungsvorrichtung.

Die Figuren sind beispielhaft schematisch. Gleiche Bezugszeichen benennen gleiche Teile in allen Ansichten.

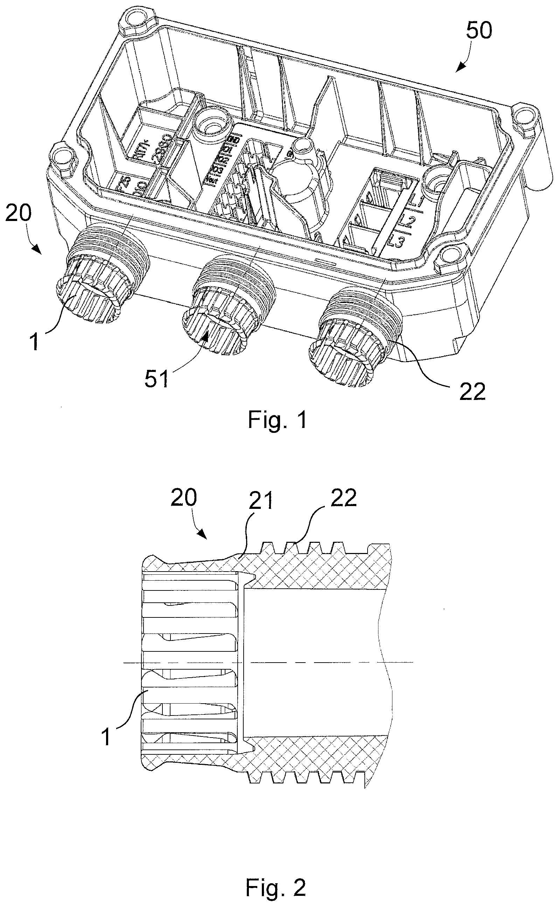

In Figur 1 ist ein nach oben offener Klemmkasten 50 mit drei im Spritzgussverfahren einstückig an dessen Gehäuse außenseitig angespritzten Kabelverschraubungsvorrichtungen 20 in perspektivischer Ansicht gezeigt. An der jeweiligen Stelle der Kabelverschraubungsvorrichtungen 20 weist der Klemmkasten 50 Öffnungen in der Außenwandung auf, die zusammen mit dem hohlen Inneren der Kabelverschraubungsvorrichtungen einen durchlaufenden Öffnungskanal 51 zur Durchführung von Kabeln ins Innere des Klemmkastens 50 bilden. Der gezeigte Klemmkasten 50 ist in der Form beispielhaft im Wesentlichen quaderförmig und mit einem nicht dargestellten Deckel verschließbar Einsteckabschnitte im Inneren des Klemmkastens sind ebenfalls angedeutet.

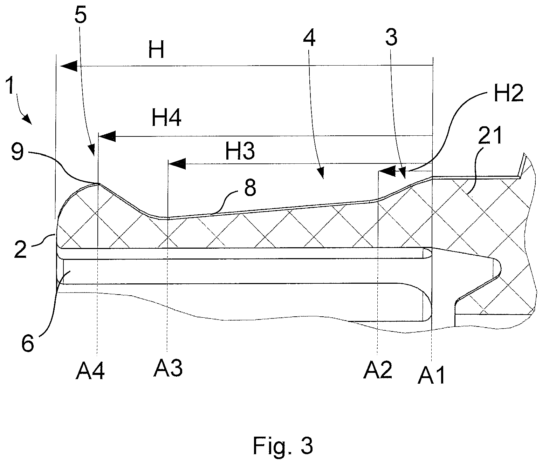

Bezugnehmend auf die Figuren 2 und 3 werden die aus faserverstärktem und mit Flammschutz versetzten Kunststoffmaterial gebildete Kabelverschraubungsvorrichtungen 20 sowie die daran einstückig ausgebildeten Lamellen 1 näher beschrieben. Jede der Kabelverschraubungsvorrichtungen 20 weist eine Vielzahl von identisch geformten Lamellen 1 auf, die zueinander beabstandet in einem umlaufenden Lamellenkranz angeordnet sind. Die Lamellen 1 sind elastisch und zumindest teilweise in radialer Richtung biegbar. Ihre nach radial innen weisenden Innenflächen 6 sind über die gesamte axiale Erstreckung flächig und eben und bestimmen einen im Wesentlichen konstanten Innendurchmesser der Kabelverschraubungsvorrichtung 20 im Bereich der Lamellen 1 aus. An der Kabelverschraubungsvorrichtung 20 ist ein als Außengewinde 22 ausgebildetes Befestigungselement vorgesehen, auf das ein nicht dargestelltes Befestigungsmittel (beispielsweise Schraubenkopf) mit entsprechendem Gegengewinde aufschraubbar ist. Das Befestigungsmittel überdeckt dabei vorzugsweise auch die Lamellen 1 in axialer Richtung und übt einen nach radial innen gerichteten Druck auf die Lamellen 1 aus, um diese gegen das durch den Öffnungskanal 51 geführte Kabel zu pressen und dabei das Kabel positionsfest zu arretieren. Die Kontaktflächen bzw. die Arretierungsstelle kann optional eine Dichtung und/oder ein Dichtelement aufweisen.

Die Lamellen 1 der Kabelverschraubungsvorrichtung 20 erstrecken sich in axialer Richtung jeweils freistehend von dem Befestigungsabschnitt 21 an der Kabelverschraubungsvorrichtung 20 bis zu ihrem jeweiligen freien Ende 2 und weisen dabei entlang ihrer axialen Gesamterstreckung H mehrere aneinander angrenzende Abschnitte auf, die im Axialschnitt gesehen über ihre axiale Erstreckung variierende Querschnittsflächen bestimmen. Die Anpassung der Querschnittsflächen erfolgt über die axiale Gesamterstreckung H der Lamellen 1 ausschließlich über eine Variation des Verlaufs ihrer Außengeometrie. Die Außengeometrie wird durch die den Innenflächen radial gegenüberliegenden Außenflächen 8 bestimmt.

Ausgehend von dem Befestigungsabschnitt 21 verringert sich die Querschnittsfläche der Lamelle 1 entlang ihrer axialen Erstreckung in Richtung ihres freien Endes 2 im Einlaufabschnitt 3 von einer Querschnittsfläche A1 auf eine Querschnittsfläche A2, wobei die Axialerstreckung H2 des Einlaufabschnitts 3 in der gezeigten Ausführung 0,16 der Gesamterstreckung H der Lamelle 1 beträgt. Das Verhältnis der Querschnittsflächen A2/A1 beträgt 0,65. Der Verlauf der Außenfläche 8 im Einlaufabschnitt 3 der Lamelle 8 ist stetig und linear oder im Wesentlichen linear.

An den Einlaufabschnitt 3 schließt in Axialrichtung zum freien Ende 2 der Lamelle 1 hin gesehen der Mittelabschnitt 4 an. Im Mittelabschnitt 4 verringert sich die Querschnittsfläche verteilt über eine größere axiale Länge mit geringerer Steigung. Der Verlauf der Außenfläche 8 im Mittelabschnitt 4 der Lamelle 8 ist wie im Einlaufabschnitt 3 stetig und linear. Der Mittelabschnitt 4 erstreckt sich bis zu einem Punkt der geringsten Querschnittsfläche A3, der von dem freien Ende 2 der Lamelle 1 axial beabstandet ist. Das Verhältnis der Querschnittsflächen an den beiden axialen Enden des Mittelabschnitts 4 beeinflusst die positive Wirkung der Erfindung ganz erheblich, wobei in dem gezeigten Ausführungsbeispiel eine Verhältnis der geringsten Querschnittsfläche A3 der Lamelle 1 zu der Querschnittsfläche am gegenüberliegenden axialen Ende des Mittelabschnitts 4 einen Wert von A3/A2=0,63 einnimmt. Die axiale Erstreckung des Mittelabschnitts 4 bestimmt sich dabei aus der Differenz der in Figur 3 eingezeichneten Längen H3 und H2 und liegt bei einem Faktor von 0,55 der Gesamterstreckung H der Lamelle 1 .

An den Mittelabschnitt 4 schließt sich in axialer Richtung bis zu dem freien Ende 2 der Lamelle 1 der Endabschnitt 5 an, in dem sich die Querschnittsfläche zunächst stetig und im Wesentlichen linear bis auf ein lokales Maximum 9 vergrößert, um sich anschließend in einem im Wesentlichen exponentiellen Verlauf bis zum freien Ende 2 der Lamelle 1 wieder zu verringern und mit dem freien Ende 2 abzuschließen. Der Übergang zwischen dem Mittelabschnitt 4 und dem Endabschnitt 5 ist fließend und vorzugsweise kantenfrei. Das durch die Länge H4 gekennzeichnete lokale Maximum 9 mit maximaler Querschnittsfläche A4 liegt im Wesentlichen axial mittig innerhalb des Endabschnitts 5, genauer gesagt bei einem Wert von 0,89 der Gesamterstreckung H der Lamelle 1. Die Querschnittsfläche A4 entspricht im gezeigten Ausführungsbeispiel im Wesentlichen derjenigen der Ausgangsquerschnittsfläche A1.

## Patentansprüche

1. Kabelverschraubungsvorrichtung (20) mit einer Vielzahl von identisch geformten Lamellen (1), die sich freistehend von einem Befestigungsabschnitt (21) an der Kabelverschraubungsvorrichtung (20) in axialer Richtung bis zu einem freien Ende (2) erstrecken und entlang ihrer axialen Gesamterstreckung eine Mehrzahl von aneinander angrenzenden Abschnitten aufweisen, die im Axialschnitt gesehen jeweils unterschiedliche oder über ihre axiale Erstreckung variierende Querschnittsflächen aufweisen, wobei sich die Querschnittsfläche der Lamellen (1) ausgehend von dem Befestigungsabschnitt (21) entlang ihrer axialen Erstreckung bis zu einem Punkt der geringsten Querschnittsfläche A3 zumindest abschnittsweise verringert und der Punkt der geringsten Querschnittsfläche A3 der Lamellen (1) von ihrem freien Ende (2) axial beabstandet ist, wobei die Lamellen (1) nach radial innen weisende Innenflächen (6) aufweisen, die im bestimmungsgemäßen Gebrauch einem durch die Kabelverschraubungsvorrichtung (20) durchführbaren Kabel zuweisen, und sich die Innenflächen (6) eben und geradlinig in axialer Richtung erstrecken, so dass die Lamellen (1) über ihre axiale Gesamterstreckung H einen im Wesentlichen konstanten Innendurchmesser der Kabelverschraubungsvorrichtung (20) ausbilden, **gekennzeichnet dadurch, dass** sich die Querschnittsfläche der Lamellen (1) in einem an die Kabelverschraubungsvorrichtung (20) anschließenden Einlaufabschnitt (3) von einer Querschnittsfläche A1 auf eine Querschnittsfläche A2 verringert, und der Einlaufabschnitt (3) ein Axialerstreckung aufweist, die in einem Bereich von 0,1 - 0,2 der Gesamterstreckung H der Lamellen (1) liegt, so dass gilt 0,1 < H2/H < 0,2, insbesondere 0,14 < H2/H < 0,17, und wobei sich die Querschnittsfläche der Lamellen (1) in einem an den Einlaufabschnitt (3) angrenzenden und sich bis zu dem Punkt der geringsten Querschnittsfläche A3 erstreckenden Mittelabschnitt (4) von der Querschnittsfläche A2 auf eine geringste Querschnittsfläche A3 der Lamellen (1) verringert, wobei gilt 0,3 ≤ A3/A2 ≤ 0,8, insbesondere 0,5 ≤ A3/A2 ≤ 0,7, insbesondere 0,6 ≤ A3/A2 ≤ 0,65.

2. Kabelverschraubungsvorrichtung nach Anspruch 1, **dadurch gekennzeichnet, dass** der Mittelabschnitt (4) ein Axialerstreckung H3-H2 aufweist, die in einem Bereich von 0,4 - 0,7 der Gesamterstreckung H der Lamellen (1) liegt, so dass gilt 0,4 ≤ (H3-H2)/H ≤ 0,7, insbesondere 0,5 ≤ (H3-H2)/H ≤ 0,6.

3. Kabelverschraubungsvorrichtung nach einem der vorigen Ansprüche, **dadurch gekennzeichnet, dass** die Querschnittsfläche der Lamellen (1) in einem sich an das freie Ende (2) der jeweiligen Lamelle (1) angrenzenden Endabschnitt (5) ein lokales Maximum (9) aufweist.

4. Kabelverschraubungsvorrichtung nach Anspruch 2, **dadurch gekennzeichnet, dass** eine maximale Querschnittsfläche A4 der Lamellen (1) in einem sich jeweils an den Mittelabschnitt (4) und an das freie Ende (2) der Lamellen (1) angrenzenden Endabschnitt (5) in einem Verhältnis zu der Querschnittsfläche A1 an der Kabelverschraubungsvorrichtung (20) und der geringsten Querschnittsfläche A3 der Lamellen (1) steht, dass gilt 1,1 A1 ≥ A4 ≥ A3.

5. Kabelverschraubungsvorrichtung nach Anspruch 3 oder 4, **dadurch gekennzeichnet, dass** eine maximale Querschnittsfläche der Lamellen (1) an einer Position H4 im Endabschnitt (5) liegt, die im Verhältnis zur Gesamterstreckung der Lamellen (1) in einem Bereich liegt, dass gilt 0,8 ≤ H4/H ≤ 0,95, insbesondere 0,85 ≤ H4/H ≤ 0,9.

6. Kabelverschraubungsvorrichtung nach einem der Ansprüche 2 bis 5, **dadurch gekennzeichnet, dass** ein Verhältnis der Querschnittsflächen A2/A1 in einem Bereich liegt, dass gilt 0,4 ≤ A2/A1 ≤ 0,85, insbesondere 0,6 ≤ A2/A1 ≤ 0,7.

7. Kabelverschraubungsvorrichtung nach einem der vorigen Ansprüche, **dadurch gekennzeichnet, dass** die Lamellen elastisch und aus einem faserverstärkten und/oder mit einem Flammschutz versetzten Kunststoffmaterial gebildet sind.

8. Kabelverschraubungsvorrichtung nach Anspruch 1, **dadurch gekennzeichnet, dass** eine Anpassung der Querschnittsflächen über die axiale Gesamterstreckung H der Lamellen (1) ausschließlich über deren Außengeometrie erfolgt.

9. Kabelverschraubungsvorrichtung nach einem der vorigen Ansprüche 1 oder 8, **dadurch gekennzeichnet, dass** die Lamellen (1) einstückig daran ausgebildet sind.

10. Kabelverschraubungsvorrichtung nach einem der vorigen Ansprüche 1 oder 9, **dadurch gekennzeichnet, dass** sie ein Befestigungselement zum funktionalen Zusammenwirken mit einem Befestigungsmitteil aufweist und sich die Lamellen (1) angrenzend an das Befestigungselement in axialer Richtung erstrecken, so dass das Befestigungsmittel auf die Kabelverschraubungsvorrichtung (20) aufsetzbar ist und sowohl auf die Lamellen (1) als auch auf das Befestigungselement einwirken kann.

11. Klemmkasten (50) mit mindestens einer im Spritzgussverfahren einstückig daran angespritzten Kabelverschraubungsvorrichtung (20) nach einem der vorigen Ansprüche 1 bis 10, wobei die mindestens eine Kabelverschraubungsvorrichtung (20) und der Klemmasten (50) einen durchlaufenden Öffnungskanal (51) zur Durchführung eines Kabels durch die Kabelverschraubungsvorrichtung (20) und in ein Inneres des Klemmkastens (50) aufweisen.

## Claims

1. A cable screwing device (20) having a multiplicity of identically shaped lamellae (1) that extend free-standing in an axial direction from a fastening section (21) on the cable screwing device (20) up to an unattached end (2) and that each have a plurality of adjoining sections along their entire axial extension, each section having a different cross-sectional area or a cross-sectional area that varies over the axial extension of said lamella, as viewed in the axial cross section, wherein the cross-sectional area of the lamellae (1) decreases, at least section by section, along their axial extension from the fastening section (21) up to a point having the smallest cross-sectional area A3, and the point of the lamellae (1) having the smallest cross-sectional area A3 is spaced axially from the unattached end (2) thereof, wherein the lamellae (1) have inner surfaces (6) that face radially inward and that, when used as intended, face toward a cable that can be routed through the cable screwing device (20), and the inner surfaces (6) extend flat and rectilinearly in the axial direction, so that over their overall axial extension H, the lamellae (1) form a substantially constant inner diameter of the cable screwing device (20), **characterized in that** the cross-sectional area of the lamellae (1) decreases from a cross-sectional area A1 to a cross-sectional area A2 in an inlet section (3) adjoining the cable screwing device (20), and the inlet section (3) has an axial extension ranging from 0.1 to 0.2 of the overall extension H of the lamellae (1). so that 0.1 < H2/H < 0.2, in particular 0.14 < H2/H < 0.17, and wherein the cross-sectional area of the lamellae (1) in a center section (4) adjoining the inlet section (3) and extending up to the point having the smallest cross-sectional area A3 decreases from the cross-sectional area A2 to the smallest cross-sectional area A3 of the lamellae (1), wherein 0.3 ≤ A3/A2 ≤ 0.8, in particular 0.5 ≤ A3/A2 ≤ 0.7, more particularly 0.6 ≤ A3/A2 ≤ 0.65.

2. The cable screwing device according to claim 1, **characterized in that** the center section (4) has an axial extension H3-H2 that lies within a range of 0.4 to 0.7 of the overall extension H of the lamellae (1), so that 0.4 ≤ (H3-H2)/H ≤ 07, in particular 0.5 ≤ (H3-H2)/H ≤ 0.6.

3. The cable screwing device according to any one of the preceding claims, **characterized in that** the cross-sectional area of the lamellae (1) has a local maximum (9) in an end section (5) that adjoins the unattached end (2) of the respective lamella (1).

4. The cable screwing device according to claim 2, **characterized in that** the relationship between a maximum cross-sectional area A4 of the lamellae (1), in an end section (5) adjoining both the center section (4) and the unattached end (2) of the lamellae (1), and the cross-sectional area A1 at the cable screwing device (20), and the smallest cross-sectional area A3 of the lamellae (1) is 1.1 A1 ≤ A4 ≤ A3.

5. The cable screwing device according to claim 3 or 4, **characterized in that** a maximum cross-sectional area of the lamellae (1) lies at a position H4 in the end section (5), and a ratio of said maximum cross-sectional area to the overall extension of the lamellae (1) is within a range of 0,8 ≤ H4/H ≤ 0.95, in particular of 0.85 ≤ H4/H ≤ 0.9.

6. The cable screwing device according to any one of claims 2 to 5, **characterized in that** a ratio of the cross-sectional areas is within a range of 0.4 ≤ A2/A1 ≤ 0.85, in particular of 0.6 ≤ A2/A1 ≤ 0.7

7. The cable screwing device according to any one of the preceding claims, **characterized in that** the lamellae are elastic and made of a fiber-reinforced and/or flame-retardant plastic material.

8. The cable screwing device according to claim 1, **characterized in that** the change in the cross-sectional areas over the overall axial extension H of the lamellae (1) occurs only over the outer geometry thereof.

9. The cable screwing device according to either of the preceding claims 1 and 8, **characterized in that** the lamellae (1) are formed integrally thereon.

10. The cable screwing device according to either of the preceding claims 1 and 9, **characterized in that** it has a fastening element for cooperating functionally with a fastening means, and the lamellae (1) adjoin the fastening element and extend in the axial direction, so that the fastening means can be placed on the cable screwing device (20) and can act both on the lamellae (1) and on the fastening element.

11. A terminal box (50) having at least one cable screwing device (20) molded integrally thereon by injection molding, according to any one of the preceding claims 1 to 10, wherein the at least one cable screwing device (20) and the terminal box (50) have an opening channel (51) running through them for routing a cable through the cable screwing device (20) and into the interior of the terminal box (50).

## Revendications

1. Dispositif de presse-étoupe (20) avec une pluralité de lamelles (1) formées de façon identique, qui s'étendent de manière indépendante d'une section de fixation (21) au niveau du dispositif de presse-étoupe (20) dans la direction axiale jusqu'à une extrémité libre (2) et présentent le long de leur extension totale axiale une pluralité de sections adjacentes l'une à l'autre, qui présentent vu dans la coupe axiale respectivement des sections transversales différentes ou variant sur leur extension axiale, dans lequel la section transversale des lamelles (1) diminue au moins par section en partant de la section de fixation (21) le long de leur extension axiale jusqu'à un point de la plus petite section transversale A3 et le point de la plus petite section transversale A3 des lamelles (1) est espacé axialement de leur extrémité libre (2), dans lequel les lamelles (1) présentent des surfaces intérieures (6) dirigées radialement vers l'intérieur, qui attribuent dans l'utilisation conforme à un câble pouvant passer à travers le dispositif de presse-étoupe (20), et les surfaces intérieures (6) s'étendent de manière plane et rectiligne dans la direction axiale de sorte que les lamelles (1) forment sur leur extension totale axiale H un diamètre intérieur sensiblement constant du dispositif de presse-étoupe (20), **caractérisé en ce que** la section transversale des lamelles (1) diminue dans une section d'entrée (3) se raccordant au dispositif de presse-étoupe (20) d'une section transversale A1 à une section transversale A2, et la section d'entrée (3) présente une extension axiale, qui se situe dans une plage de 0,1 - 0,2 de l'extension totale H des lamelles (1), de sorte que 0,1 < H2/H < 0,2, en particulier 0,14 <H2/H < 0,17, et dans lequel la section transversale des lamelles (1) diminue dans une section médiane (4) adjacente à la section d'entrée (3) et s'étendant jusqu'au point de la plus petite section transversale A3 de la section transversale A2 à une plus petite section transversale A3 des lamelles (1), dans lequel 0,3 ≤ A3/A2 ≤ 0,8, en particulier 0,5 ≤ A3/A2 ≤ 0,7, en particulier 0,6 ≤ A3/A2 ≤ 0,65.

2. Dispositif de presse-étoupe selon la revendication 1, **caractérisé en ce que** la section médiane (4) présente une extension axiale H3-H2, qui se situe dans une plage de 0,4 - 0,7 de l'extension totale H des lamelles (1), de sorte que 0,4 ≤ (H3-H2)/H ≤ 0,7, en particulier 0,5 ≤ (H3-H2)/H ≤ 0,6.

3. Dispositif de presse-étoupe selon l'une quelconque des revendications précédentes, **caractérisé en ce que** la section transversale des lamelles (1) présente dans une section d'extrémité (5) adjacente à l'extrémité libre (2) de la lamelle (1) respective un maximum local (9).

4. Dispositif de presse-étoupe selon la revendication 2, **caractérisé en ce qu'**une section transversale maximum A4 des lamelles (1) dans une section d'extrémité (5) adjacente respectivement à la section médiane (4) et à l'extrémité libre (2) des lamelles (1) est dans un rapport avec la section transversale A1 au niveau du dispositif de presse-étoupe (20) et la plus petite section transversale A3 des lamelles (1), que 1,1 A1 ≥ A4 ≥ A3.

5. Dispositif de presse-étoupe selon la revendication 3 ou 4, **caractérisé en ce qu'**une section transversale maximum des lamelles (1) se situe à une position H4 dans la section d'extrémité (5), qui se situe dans le rapport avec l'extension totale des lamelles (1) dans une plage, que 0,8 ≤ H4/H ≤ 0,95, en particulier 0,85 ≤ H4/H ≤ 0,9.

6. Dispositif de presse-étoupe selon l'une quelconque des revendications 2 à 5, **caractérisé en ce qu'**un rapport des sections transversales A2/A1 se situe dans une plage, que 0,4 ≤ A2/A1 ≤ 0,85, en particulier 0,6 ≤ A2/A1 ≤ 0,7.

7. Dispositif de presse-étoupe selon l'une quelconque des revendications précédentes, **caractérisé en ce que** les lamelles sont formées de manière élastique et en une matière plastique renforcée de fibres et/ou dotée d'une protection ignifuge.

8. Dispositif de presse-étoupe selon la revendication 1, **caractérisé en ce qu'**une adaptation des sections transversales par le biais de l'extension totale axiale H des lamelles (1) se fait exclusivement par le biais de leur géométrie extérieure.

9. Dispositif de presse-étoupe selon l'une quelconque des revendications précédentes 1 à 8, **caractérisé en ce que** les lamelles (1) y sont réalisées d'un seul tenant.

10. Dispositif de presse-étoupe selon l'une quelconque des revendications précédentes 1 à 9, **caractérisé en ce qu'**il présente un élément de fixation pour la coopération fonctionnelle avec un moyen de fixation et les lamelles (1) s'étendent de manière adjacente à l'élément de fixation dans la direction axiale de sorte que le moyen de fixation peut être posé sur le dispositif de presse-étoupe (20) et peut agir aussi bien sur les lamelles (1) que sur l'élément de fixation.

11. Boîte de jonction (50) avec au moins un dispositif de presse-étoupe (20) qui y est moulé par injection d'un seul tenant dans le procédé de moulage par injection selon l'une quelconque des revendications 1 à 10, dans laquelle l'au moins un dispositif de presse-étoupe (20) et la boîte de jonction (50) présentent un canal d'ouverture traversant (51) pour le passage d'un câble à travers le dispositif de presse-étoupe (20) et dans un intérieur de la boîte de jonction (50).
